# EUROPEAN PATENT SPECIFICATION

(11) **EP 1 063 128 B1**
(45) Date of publication and mention of the grant of the patent: **14.09.2005**
(21) Application number: 00304720.6
(22) Date of filing: 02.06.2000
(51) Int. Cl.: B60R 1/074, B60R 1/08

(54) **Exterior mirror for motor vehicle**
Kraftfahrzeug- Aussenrückblickspiegel
Rétroviseur extérieur de véhicule

(30) Priority: 22.06.1999 GB 9914420
(43) Date of publication of application: 27.12.2000
(73) Proprietor: Schefenacker Vision Systems France S.A., 77981 St. Fargeau - Ponthierry Cedex (FR)
(72) Inventor: Duroux, Bernard, 78990 Garancieres (FR); Dumont, Daniel, 77250 Veneux-Les-Sablons (FR)
(74) Representative: Price, Nigel John King

(56) References cited:
- EP-A2- 0 209 296
- EP-A2- 0 881 124
- JP-A- 3 016 841
- US-A- 4 707 788
- PATENT ABSTRACTS OF JAPAN vol. 015, no. 509 (M-1195), 24 December 1991 (1991-12-24) -& JP 03 224838 A (NISSAN MOTOR CO LTD), 3 October 1991 (1991-10-03)
- PATENT ABSTRACTS OF JAPAN vol. 015, no. 134 (M-1099), 3 April 1991 (1991-04-03) & JP 03 016841 A (MATSUYAMA SEISAKUSHO:KK), 24 January 1991 (1991-01-24)

## Description

This invention relates to an exterior rear view mirror for a vehicle, comprising a base for mounting on a vehicle body, a housing pivotally mounted on the base for angular movement about a first pivot axis, a reflective member mounted in the housing, and an electric motor having an output shaft arrange to cause angular movement of the housing about the first pivot axis.

EP-A-0209296 discloses an exterior mirror for a vehicle having a mirror comprising a base member for mounting on a vehicle body, a housing pivotally mounted on the base for angular movement about a first pivot axis, a reflective member pivotally mounted in the housing for angular movement relative thereto only about a second pivot axis and electrically operated drive means for causing angular movement of the housing about first pivot axis and angular movement of the reflective member relative to the housing about the second pivot axis.

EP-A-0881124 discloses an exterior mirror for a vehicle having a mirror head which can be moved from a deployed position for normal driving to a parked position in which it lies closely adjacent to the vehicle body and thus is less liable to damage when the vehicle is not in use.

JP 3-224830 discloses a mirror in accordance with the pre-characterising portion of claim 1. JP 3-16841 discloses a mirror that detects a frequency of rotation in order to determine if a mirror has rotated to a particular position.

It is an object of the present invention to provide an exterior vehicle mirror in which the same mechanism is used both to adjust the orientation of the mirror head about a first axis, in order to provide the driver with a required field of view, and to move the mirror head between a deployed position and a parked position.

This is solved by an exterior rear view mirror having the features of claim 1.

An embodiment of the invention will now be described, by way of example, with reference to the accompanying drawings, in which:
Figure 1 is a partially broken-away elevational view of a rear view mirror in accordance with the invention from the side of the housing on which the reflective member is exposed;
Figure 2 is a cross-sectional view taken on the line 2-2 in Figure 1; and
Figure 3 is a block diagram illustrating the control system for the mirror shown in Figures 1 and 2.

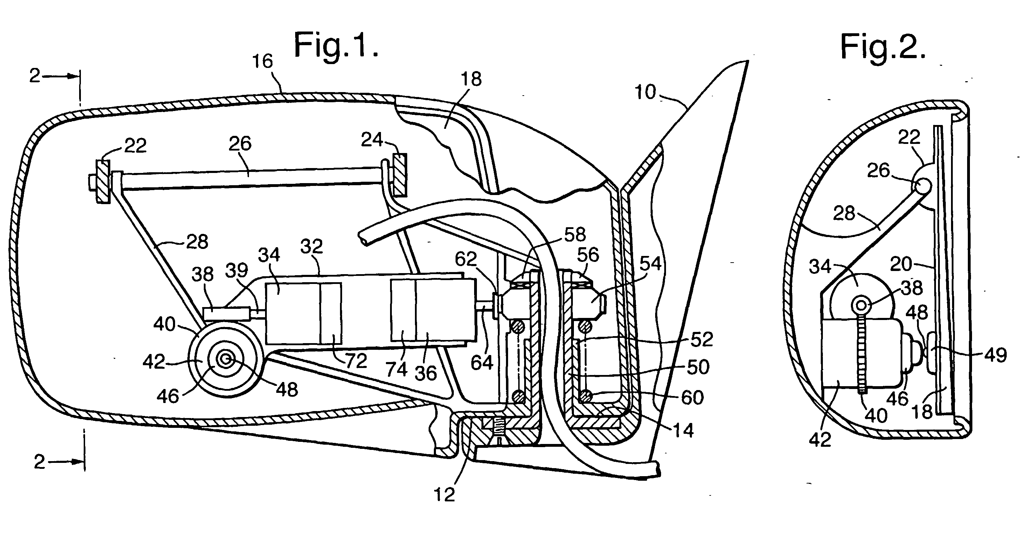

Figures 1 and 2 illustrate a rear-view mirror having a base member 10 adapted to be mounted on the body of a vehicle. The base member 10 has a flat upper wall 12 which abuts against a flat lower wall of a mirror housing 16.

Within the housing 16, a reflective member 18 is secured to a mirror carrier 20 with integrally formed rearwardly extending brackets 22 and 24 which are journalled on a shaft 26. The shaft 26 is mounted on ribs 28 and 30 which are formed integrally with the housing 16. As can be seen from Figure 2, the reflective member 18 comprises a prism 18 oriented so that its upper edge is wider than its lower edge, the angle between its two faces preferably being between 1° and 3°. The prism 18 has a reflective layer on its surface abutting the mirror carrier 20. At night, if the driver of a following car fails to dip his headlights, the mirror carrier 20 can be tilted through the angle between the faces of the prism (i.e. between 1° and 3°) so that a driver of the vehicle sees an image reflected from the front surface of the prism 18 which is dimmer than the image which would have been reflected by the reflective layer.

A mounting member 32 extends between the ribs 28 and 30 and has two electric motors 34 and 36 mounted thereon. A worm gear 38 is mounted on the output shaft 39 of the motor 34. The worm gear 38 engages with a pinion 40 forming part of a screw jack drive 42 of the type described in EP-A-0549173. A jacking screw 44 projects through a flexible synthetic rubber boot 46 on one end of the screw jack drive 42. A spherical formation 48 on the end of the jacking screw 44 engages in a complementary socket 49 on the inside surface of the mirror carrier 20. Thus, rotation of the worm gear 38 causes adjustment of the orientation of the reflective member 18 about the shaft 26.

The base member 10 has a flanged hollow spigot 50 secured by its flange to the flat upper wall 12 so as to project through an opening in the flat lower wall 14 of the housing 16. A cylindrical wall 52, formed integrally with the housing 16, surrounds the stud 50 so as to form a pivot bearing. A pinion 54 is journalled on the stud 50 above the cylindrical wall 52. The upper face of the pinion 54 carries detent formations 56 which are adapted to engage with complementary formations on a cap 58 which is rotationally fast with the stud 50. A compression spring 60 urges the detent formations 56 and the cap 58 into engagement with one another. The pinion 54 is engaged by a worm gear 62 secured to the output shaft 64 of the second motor 36. Thus, rotation of the shaft 64 causes angular movement of the housing 16 relative to the base member 10.

If the housing 16 is subject to impact from the front or rear, the detent formations 56 disengage from the complementary formations on the cap 58, allowing the housing 16 to fold backwards or forwards against the side of a vehicle on which the mirror is mounted.

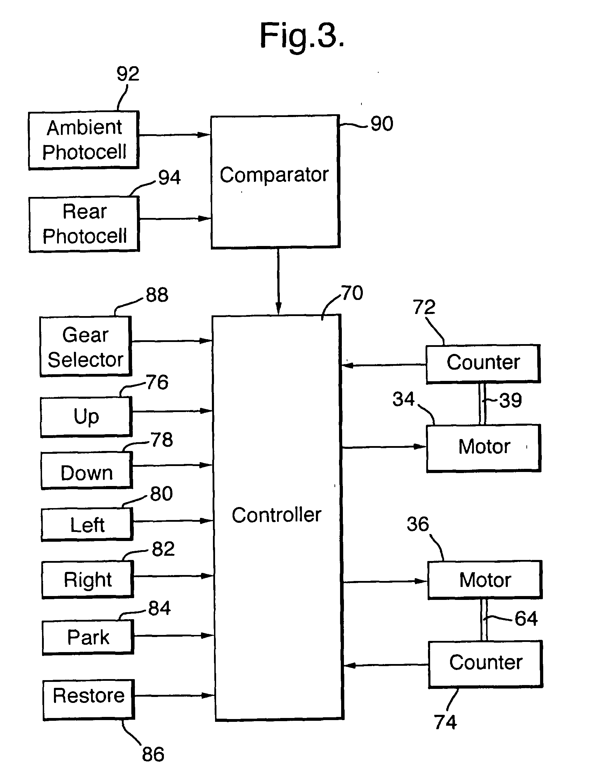

Figure 3 is a block diagram of a control system for the motors 34 and 36. The control system comprises a controller 70 which produces control signals to operate the motors 34 and 36, each of which has associated therewith a respective counter 72, 74 for supplying a signal to the controller 70 indicating the number of revolutions made by the corresponding motor 34, 36.

In order to adjust the mirror in the up/down direction, the controller 70 has an "Up" push button 76 and a "Down" push button 78. The motor 34 rotates in the appropriate direction for as long as either of these push buttons is depressed so as to tilt the mirror carrier 20 at a rate of about 3° per second. Similarly, the controller 70 has "Left" and "Right" push buttons 80 and 82 for causing the controller to send appropriate signals to the motor 36 to cause angular movement of the housing 16 about the spigot 50, once again at a rate of about 3° per second. This permits the orientation of the mirror carrier to be adjusted to provide the required field of view depending on the driver's seating position in the vehicle.

When it is desired to drive the mirror housing 16 to a parked position in which it is folded against the side of the vehicle, a "Park" button 84 on the controller is pressed. This causes the controller to drive the motor 36 at a speed such as to cause angular movement of the housing 16 about the spigot 50 at a rate of about 30° per second. At the same time, the controller counts the output produced by the counter 74 to determine the number of revolutions performed by the motor 36 to move the housing 16 until it abuts against a stop (not shown), thus causing the motor 36 to stall. The resulting rise in current is sensed by the controller which then disconnects the supply to the motor 36.

When it is desired to restore the mirror from its parked position to its deployed position, a "Restore" push button 86 on the controller 70 is pressed. The controller then supplies electric current to the motor 36, so as to cause it to rotate in the opposite direction until the counter 74 indicates that the same number of revolutions have been performed as was necessary to move the mirror head 16 from its deployed position to its parked position.

The controller 70 also receives an input from the gear selector 88 of the vehicle, indicating the engagement of reverse gear. This causes the controller 70 to supply current to the motor 34 to cause it to tilt the mirror carrier downwardly at a rate of about 30° per second until it abuts against a stop (not shown) located so that the field of view of the mirror includes the ground adjacent to the corresponding rear wheel of the vehicle. The counter 72 provides a signal to the controller 70 indicating the number of revolutions of the motor 34 necessary to perform this tilting movement. When the mirror carrier reaches this stop, the motor 34 stalls and the resulting increase in current is detected by the controller 70 which then disconnects the electrical supply to the motor 34. When reverse gear is disengaged, the controller 70 causes the motor 34 to rotate in the opposite direction until the counter 72 indicates that the same number of revolutions have been performed as were necessary to move the mirror to its tilted position.

A comparator 90 is arranged to receive a signal from an ambient photocell 92 indicating the level of ambient light outside the vehicle. The comparator 90 also receives a signal from a rear photocell 94 indicating the level of light incident on the mirror from the rear of the vehicle. When the level of light indicated by the ambient photocell 92 indicates lack of daylight and the rear photocell 94 indicates a light level which exceeds that detected by the ambient photocell 92 by more than a predetermined amount e.g. because the driver of a following vehicle has fail;ed to dip his headlights, the comparator 90 sends a signal to the controller 70, causing the motor 34 to tilt the mirror carrier 20 downwardly until the counter 72 indicates that the number of revolutions performed is sufficient to tilt the mirror carrier 20 through an angle equal to the angle between the front and rear surfaces of the prism 18. The driver now sees a dimmer image reflected from the front surface of the prism 18 rather than a bright image reflected from the reflective layer on the rear surface thereof. To avoid repeated rapid movement of the mirror between its tilted position and its normal position, the controller 70 causes the motor 34 to tilt the mirror carrier 20 back to its normal deployed position only when the difference in light levels between the two photocells 92 and 94 has been less than the above mentioned threshold for at least ten seconds. When this occurs, the motor 34 is run until the counter 72 indicates that the number of revolutions equivalent to the prism angle have been performed.

The controller 70 may include a memory adapted to store information identifying one or more desired deployed positions for the reflective member 18.

## Claims

1. An exterior rear view mirror for a vehicle comprising a base (10) for mounting on a vehicle body, a housing (16) pivotally mounted on the base (10) for angular movement about a first pivot axis (50), a reflective member (18) mounted in the housing (16), and an electric motor (36) having an output shaft (64) arranged to cause angular movement of the housing (16) about the first pivot axis (50), wherein a controller (70) is adapted to control the electric motor (36) so as to selectively drive the housing (16) about the first axis (50) either at a first speed or at a second speed which is faster than the first speed; **characterised in that** the controller (70) includes measuring means (74) for determining the angle through which the housing (16) has been moved.

2. An exterior rear view mirror according to claim 1, wherein the measuring means comprises a counter (74) for counting the number of revolutions of the output shaft (64) of the motor (36).

3. An exterior rear view mirror according to claim 1 or 2, wherein the second speed is at least five times as fast as the first speed.

4. An exterior rear view mirror according to claim 3, wherein the second speed is at least ten times as fast as the first speed.

5. An exterior rear view mirror according to any preceding claim, wherein the reflective member (18) is pivotally mounted in the housing (16) for angular movement relative thereto about a second pivot axis (26) and a second electric motor (34) has an output shaft (39) arranged to adjust the reflective member (18) in altitude relative to the housing (16) and the controller (70) is adapted to control the second electric motor (34).

6. An exterior rear view mirror according to claim 5, wherein the controller (70) includes measuring means (74) for determining the angle through which the reflective member (18) has been moved.

7. An exterior rear view mirror according to claim 7, wherein the measuring means comprises a second counter (72) for counting the number of revolutions of the output shaft (39) of the second motor (34).

8. An exterior rear view mirror according to claim 6 or 7, wherein the reflective member (18) has a first reflective surface having a first reflectivity and a second reflective surface having a second reflectivity greater than the reflectivity of the first reflective surface and disposed at a predetermined angle to the first surface, and the controller (70) is arranged to determine when the reflective member (18) has been tilted through an angle equal to said predetermined angle.

9. An exterior rear view mirror according to claim 8, wherein the controller (70) includes first and second light sensors (92, 94) responsive respectively to ambient light and to light incident on the reflective member (18) and arranged to tilt said reflective member (18) through an angle equal to said predetermined angle when the difference in the light levels sensed by the two sensors (92, 94) exceeds a predetermined amount.

10. An exterior rear view mirror according to any of claims 5 to 9, wherein the controller (70) is linked to a vehicle gear selector (88) so as to tilt the reflective member (18) downwardly when reverse gear is engaged and the controller (70) is arranged to sense the angle through which the reflective member (18) has been tilted from its deployed position and to drive the reflective member (18) back through this angle when reverse gear is deselected.

## Patentansprüche

1. Außenrückspiegel für ein Fahrzeug, umfassend einen Träger (10) zum Anbringen an einem Fahrzeugaufbau, ein Gehäuse (16), das an dem Träger (10) zur Winkelbewegung um eine erste Drehachse (50) drehbar befestigt ist, ein in dem Gehäuse (16) angebrachtes Spiegelelement (18) und ein Elektromotor (36) mit einer Abtriebswelle (64), die zum Bewirken einer Winkelbewegung des Gehäuses (16) um die erste Drehachse (50) angeordnet ist, wobei eine Steuerung (70) dazu angepasst ist, den Elektromotor (36) so zu steuern, dass das Gehäuse (16) um die erste Drehachse (50) wahlweise entweder mit einer ersten Geschwindigkeit oder einer zweiten Geschwindigkeit, die schneller ist als die erste Geschwindigkeit, dreht, **dadurch gekennzeichnet, dass** die Steuerung (70) eine Messeinrichtung (74) zum Ermitteln des Winkels enthält, um den das Gehäuse (16) bewegt wurde.

2. Außenrückspiegel nach Anspruch 1, wobei die Messeinrichtung einen Zähler (74) zum Zählen der Anzahl von Umdrehungen der Abtriebswelle (64) des Motors (36) umfasst.

3. Außenrückspiegel nach Anspruch 1 oder 2, wobei die zweite Geschwindigkeit wenigstens fünfmal schneller ist als die erste Geschwindigkeit.

4. Außenrückspiegel nach Anspruch 3, wobei die zweite Geschwindigkeit wenigstens zehnmal schneller ist als die erste Geschwindigkeit.

5. Außenrückspiegel nach einem der voranstehenden Ansprüche, wobei das Spiegelelement (18) in dem Gehäuse (16) zur relativen Winkelbewegung hierzu um eine zweite Drehachse (26) drehbar angebracht ist, und ein zweiter Elektromotor (34) eine Abtriebswelle (39) besitzt, die zur Höheneinstellung des Spiegelelements (18) relativ zu dem Gehäuse (16) angeordnet ist, und die Steuerung (70) dazu angepasst ist, den zweiten Elektromotor (34) zu steuern.

6. Außenrückspiegel nach Anspruch 5, wobei die Steuerung (70) eine Messeinrichtung (74) zum Ermitteln des Winkels enthält, um den das Spiegelelement (18) bewegt wurde.

7. Außenrückspiegel nach Anspruch 7, wobei die Messeinrichtung einen zweiten Zähler (72) zum Zählen der Anzahl von Umdrehungen der Abtriebswelle (39) des zweiten Motors (34) umfasst.

8. Außenrückspiegel nach Anspruch 6 oder 7, wobei das Spiegelelement (18) eine erste Spiegelfläche mit einem ersten Reflexionsvermögen und eine zweite Spiegelfläche, die ein zweites Reflexionsvermögen, das größer ist als das Reflexionsvermögen der ersten Spiegelfläche, hat und in einem vorbestimmten Winkel zur ersten Fläche angeordnet ist, besitzt, und die Steuerung (70) dazu eingerichtet ist, zu ermitteln, wenn das Spiegelelement (18) um einen Winkel geneigt wurde, der gleich dem vorbestimmten Winkel ist.

9. Außenrückspiegel nach Anspruch 8, wobei die Steuerung (70) erste und zweite Lichtsensoren (92, 94) beinhaltet, die jeweils auf Umgebungslicht und auf Licht, das auf das Spiegelelement (18) einfällt, reagieren, und die dazu ausgebildet ist, das Spiegelelement (18) um einen Winkel zu neigen, der gleich dem vorbestimmten Winkel ist, wenn der Unterschied in den durch die zwei Sensoren (92, 94) erfühlten Lichtstärken einen vorbestimmten Betrag überschreitet.

10. Außenrückspiegel nach einem der Ansprüche 5 bis 9, wobei die Steuerung (70) mit einem Fahrzeuggangwähler (88) derart verbunden ist, dass das Spiegelelement (18) nach unten geneigt wird, wenn der Rückwärtsgang eingelegt wird, und die Steuerung (70) dazu ausgebildet ist, den Winkel zu erfühlen, um den das Spiegelelement (18) aus seiner Einsatzstellung geneigt wurde und das Spiegelelement (18) um diesen Winkel wieder zurückbewegt, wenn der Rückwärtsgang ausgelegt wird.

## Revendications

1. Rétroviseur extérieur pour un véhicule, comprenant une base (10) destinée à être montée sur une carrosserie de véhicule, un boîtier (16) monté de manière pivotante sur la base (10) pour permettre un mouvement angulaire autour d'un premier axe de pivotement (50), un élément réfléchissant (18) monté dans le boîtier (16) et un moteur électrique (36) pourvu d'un arbre de sortie (64) adapté pour provoquer le mouvement angulaire du boîtier (16) autour du premier axe de pivotement (50), dans lequel un dispositif de commande (70) est adapté pour commander le moteur électrique (36) de manière à entraîner sélectivement le boîtier (16) autour du premier axe (50), soit à une première vitesse, soit à une seconde vitesse supérieure à la première vitesse ; **caractérisé par le fait que** le dispositif de commande (70) comprend un moyen de mesure (74) pour déterminer l'angle selon lequel le boîtier (16) a été déplacé.

2. Rétroviseur extérieur selon la revendication 1, dans lequel le moyen de mesure comprend un compteur (74) pour compter le nombre de tours de l'arbre de sortie (64) du moteur (36).

3. Rétroviseur extérieur selon la revendication 1 ou 2, dans lequel la seconde vitesse est au moins cinq fois supérieure à la première vitesse.

4. Rétroviseur extérieur selon la revendication 3, dans lequel la seconde vitesse est au moins dix fois supérieure à la première vitesse.

5. Rétroviseur extérieur selon l'une quelconque des revendications précédentes, dans lequel l'élément réfléchissant (18) est monté de manière pivotante dans le boîtier (16) pour permettre un mouvement angulaire par rapport à celui-ci autour d'un second axe de pivotement (26) et un second moteur électrique (34) est pourvu d'un arbre de sortie (39) adapté pour régler la hauteur de l'élément réfléchissant (18) par rapport au boîtier (16) et le dispositif de commande (70) est adapté pour commander le second moteur électrique (34).

6. Rétroviseur extérieur selon la revendication 5, dans lequel le dispositif de commande (70) comprend un moyen de mesure (74) pour déterminer l'angle selon lequel l'élément réfléchissant (18) a été déplacé.

7. Rétroviseur extérieur selon la revendication 7, dans lequel le moyen de mesure comprend un second compteur (72) pour compter le nombre de tours de l'arbre de sortie (39) du second moteur (34).

8. Rétroviseur extérieur selon la revendication 6 ou 7, dans lequel l'élément réfléchissant (18) est pourvu d'une première surface réfléchissante dotée d'un premier pouvoir réfléchissant et d'une seconde surface réfléchissante dotée d'un second pouvoir réfléchissant supérieur au pouvoir réfléchissant de la première surface réfléchissante et disposée selon un angle prédéterminé par rapport à la première surface, et le dispositif de commande (70) est adapté pour déterminer quand l'élément réfléchissant (18) a été incliné selon un angle égal audit angle prédéterminé.

9. Rétroviseur extérieur selon la revendication 8, dans lequel le dispositif de commande (70) comprend un premier et un second capteurs de lumière (92, 94) sensibles, respectivement, à la lumière ambiante et à la lumière incidente sur l'élément réfléchissant (18) et adaptés pour incliner ledit élément réfléchissant (18) selon un angle égal audit angle prédéterminé lorsque la différence des niveaux lumineux détectés par les deux capteurs (92, 94) dépasse une quantité prédéterminée.

10. Rétroviseur extérieur selon l'une quelconque des revendications 5 à 9, dans lequel le dispositif de commande (70) est relié à un sélecteur de vitesse (88) du véhicule de manière à incliner l'élément réfléchissant (18) vers le bas lorsque la marche arrière est engagée et le dispositif de commande (70) est adapté pour détecter l'angle selon lequel l'élément réfléchissant (18) a été incliné depuis sa position déployée et pour ramener l'élément réfléchissant (18) en suivant le même angle lorsque la marche arrière n'est plus sélectionnée.
